# EUROPÄISCHE PATENTSCHRIFT

(11) **EP 1 312 053 B1**
(45) Veröffentlichungstag und Bekanntmachung des Hinweises auf die Patenterteilung: **28.09.2005**
(21) Anmeldenummer: 01957737.8
(22) Anmeldetag: 27.07.2001
(51) Int. Cl.: G07F 7/10, H04N 7/167

(54) **CHIPKARTE**
CHIP CARD
CARTE A PUCE

(30) Priorität: 21.08.2000 DE 10040854
(43) Veröffentlichungstag der Anmeldung: 21.05.2003
(73) Patentinhaber: Infineon Technologies AG, 81669 München (DE)
(72) Erfinder: DIRSCHERL, Gerd, 81543 München (DE); SCHNECKENBURGER, Christian, 85635 Höhenkirchen (DE); ROSTECK, Thomas, 83624 Otterfing (DE); WIRTZ, Brigitte, 83607 Holzkirchen (DE); LAACKMANN, Peter, 81541 München (DE)
(74) Vertreter: Epping - Hermann - Fischer
(86) Internationale Anmeldenummer: PCT/DE2001/002848
(87) Internationale Veröffentlichungsnummer: WO 2002/017248

(56) Entgegenhaltungen:
- EP-A- 0 585 833
- EP-A- 0 723 373
- WO-A-01/60036
- DE-A- 4 419 805
- DE-A- 19 622 533

## Beschreibung

Die Erfindung betrifft ein Verfahren zur Decodierung eines Datensignals sowie eine entsprechende Anordnung insbesondere für Pay-TV-Anwendungen, bei denen die Decodierung eines Datensignales ohne die Chipkarte durch eine Verschlüsselung verhindert ist. Außerdem betrifft die Erfindung eine zur Durchführung des Verfahrens eingerichtete Anordnung.

Die grundlegende Funktionsweise von Pay-TV-Anwendungen besteht darin, daß das Fernsehsignal so verschlüsselt ist, daß es vom Fernsehgerät nicht dargestellt werden kann. Die Entschlüsselung des Fernsehsignales erfolgt in einem Decoder, der als sogenannte Set-Top-Box bekannt ist. Um den Decoder für ein bestimmtes Programm benutzen zu können, muß der Benutzer eine Chipkarte besitzen, die von dem Anbieter gegen Bezahlung ausgegeben wird.

Zur technischen Realisierung wird in der Austastlücke des Fernsehsignales ein sogenanter Challenge-Wert übertragen und vom Decoder an die Chipkarte weitergeleitet. In der Chipkarte bzw. in dem darin enthaltenen Mikroprozessor wird ein kryptographischer Algorithmus unter Verwendung eines gespeicherten Schlüssels auf den Challenge-Wert angewandt und ein Response-Wert an den Decoder zurückgegeben. Dieser kann daraufhin eine Entschlüsselung des Fernsehsignales vornehmen. Bei dem Decoder handelt es sich meist um ein standardisiertes Gerät, so daß mehrere Pay-TV-Programme unter Verwendung verschiedener Chipkarten mit dem gleichen Decodergerät entschlüsselt werden können.

Da die Karten zur Entschlüsselung eines Fernsehprogrammes für alle Benutzer gleich sind, hat es sich für Angreifer als lukrativ erwiesen, die Chipkartenfunktionen mit Nachbildungen zu simulieren und zu verkaufen. Diese Nachbildungen verwenden herkömmliche Mikroprozessoren und sind oft mit großen Teilen der Originalsoftware der Pay-TV-Karten ausgestattet. Das technische Problem bei der Verhinderung von Nachbildungen rührt daher, daß alle Karten eines Systems funktional gleich sind und somit relativ einfach nachgebildet werden können.

Bisher wurde versucht, durch regelmäßiges Wechseln des kryptographischen Schlüssels die Lebensdauer eines illegalen Kartensimulators zu verkürzen. Neuere Simulatoren erlauben jedoch'das Wechseln des Schlüssels über eine Tastatur oder über eine PC-Schnittstelle. Die neuen Schlüssel wiederum werden über das Internet verbreitet.

Ein weiterer Ansatz zur Verhinderung der Nachbildungen ist die Integration von kundenspezifischen Bausteinen (ASICs) als zweitem Chip auf dem Chipkartenmodul. Diese Bausteine können aber ebenfalls nach einem einmaligen Reverse Engineering Prozess in Hardware auf einem Simulator nachgebildet werden.

Die Probleme bezüglich des Einsatzes von Chipkarten bei Pay-TV-Anwendungen oder Telefonkarten sind in der Zeitschrift "A la card", Ausgabe 26-27/97, Seite 315 ff. genauer ausgeführt. Dort wird vorgeschlagen, die Chipkarten mit Kryptocoprozessoren auszustatten, um so einen Nachbau zu erschweren. Da deren Datendurchsatz hoch ist im Vergleich zu einer externen Logik, die zur Nachbildung deren Funktionen verwendet wird, kann ein Nachbau nur unter Verwendung ebenfalls eines Kryptocoprozessors erfolgen. Dies erschwert zwar den Nachbau, jedoch bleibt das verbotene Nachbilden aufgrund der hohen Stückzahlen lukrativ.

Die DE 195 39 700 C1 offenbart einen Sicherheitschip, der mehrere funktionsunterschiedliche Hardware-Komponenten aufweist. Durch eine entsprechende Befehlseingabe ist jeweils eine der Hardware-Komponenten auswählbar. Somit kann unter verschiedenen in jeweils einer anderen Hardware-Komponente implementierten Kryptoalgorithmen gewählt werden. Allerdings ist nicht möglich, die bei der Herstellung implementierten Algorithmen zu ändern. Durch ein Reverse Engineering ist auch eine solche Chipkarte nachbildbar.

Die Druckschrift US 6,055,314 offenbart ein Verfahren zum Betrachten von Videoprogrammen unter Verwendung einer Chipkarte, wie sie in der vorliegenden Anmeldung als Stand der Technik angegeben ist. Bei der Anordnung nach dieser Druckschrift ist es ebenfalls möglich, die Chipkarte zu fälschen und den Schlüssel zur Entschlüsselung des Programms illegal, beispielsweise aus dem Internet, zu beziehen.

Die WO 01 60036 A offenbart ein Decodiergerät, bei dem in einem Decodiermodul oder einem Schlüsselgenerator FPGA-Schaltungen enthalten sind. Gemäß der WO 01 60036 A ist vorgesehen, dass das Dekodiermodul, der Schlüsselgenerator und eine FPGA-Speicher gemeinsam auf einer Chipkarte angeordnet sind.

Aufgabe der Erfindung ist es, eine Verfahren anzugeben, durch das das illegale Nachbilden weiter erschwert und eine Chipkarte nicht durch die oben beschriebenen Vorgehensweisen nachgebaut werden kann.

Diese Aufgabe wird durch ein Verfahren mit den Merkmalen des Anspruchs 1 gelöst.

Die Chipkarte enthält eine funktionsprogrammierbare Hardwarekomponente, so daß bei einer Analyse der Chipkarte nur der momentane Hardware-Zustand erfaßt werden kann. Da dieser aber in einem Programmierverfahren neu festlegbar ist, ist ein Nachbau der Chipkarte nur für die Zeit funktionsfähig, bis eine Neuprogrammierung der Hardwarekomponente erfolgt.

Ein Verfahren zur Decodierung eines Datensignals mit einer Chipkarte unter Verwendung eines Decoders weist folgende Verfahrensschritte auf:
- Übertragung eines Datensignals und eines Challenge-Werts zu dem Decoder,
- Senden des Challenge-Werts an die Chipkarte,
- Anwendung eines Kryptoalgorithmus auf den Chällenge-Wert auf der Chipkarte und Rückgabe eines Response-Werts an den Decoder,
- Decodierung des Datensignals unter Verwendung des Response-Werts, wobei der Kryptoalgorithmus in einer funktionsprogrammierbaren Hardwarekomponente durchgeführt wird und durch das Senden eines Steuerbefehls an die Chipkarte modifizierbar ist.

Der Steuerbefehl für eine Neuprogrammierung der funktionsprogrammierbaren Hardwarekomponente gelangt also ebenso wie der üblicherweise verwendete Challenge-Wert mit dem Datensignal an den Decoder. Somit ist eine regelmäßige Neuprogrammierung in kleinen zeitlichen Abständen ohne Aufwand möglich. Bei einer Pay-TV-Anwendung wäre beispielsweise eine Neuprogrammierung einmal pro Stunde ohne Probleme möglich, wobei der Benutzer nichts davon merkt.

Es ist vorteilhaft, wenn der Kryptoalgorithmus so gestaltet ist, daß er in einer Hardwarekomponente wesentlich schneller ausführbar ist als in Software. Dadurch ist verhindert, daß die Funktion der Chipkarte durch einen programmierbaren Mikrocontroller nachgebildet werden kann.

Weitere Vorteile und Ausgestaltungen der Erfindung sind in den Unteransprüchen angegeben.

Die Erfindung wird nachfolgend anhand eines Ausführungsbeispieles näher erläutert. Es zeigt:
- Figur 1: ein Blockschaltbild einer Anordnung mit einer erfindungsgemäßen Chipkarte im Normalbetrieb und
- Figur 2: ein Blockschaltbild einer Anordnung mit einer erfindungsgemäßen Chipkarte bei der Neuprogrammierung.

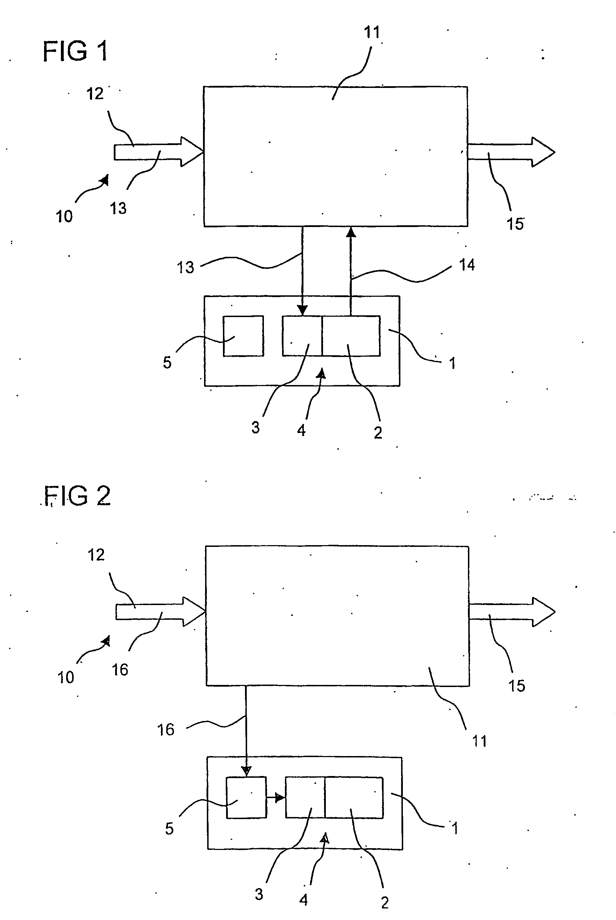

Die Figur 1 zeigt die Verwendung einer erfindungsgemäßen Chipkarte mit einem Decoder. Die Chipkarte 1 weist einen Mikrocontroller 2 und eine funktionsprogrammierbare Hardwarekomponente 3, z.B. ein FPGA, auf. Der Mikrocontroller 2 bildet mit der funktionsprogrammierbaren Hardwarekomponente 3 eine Einheit 4. Zur Programmierung der funktionsprogrammierbaren Hardwarekomponente 3 ist zudem eine Programmiervorrichtung 5 vorgesehen. Im normalen Betrieb wird ein Fernsehsignal 10 an den Decoder 11 übertragen. Das Fernsehsignal 10 enthält sowohl ein Datensignal 12 für die Darstellung der Fernsehbilder als auch einen Challenge-Wert 13, der, wie eingangs beschrieben, an die Chipkarte weitergeleitet wird. Die Anwendung eines Kryptoalgorithmus auf den Challenge-Wert 13 durch den Mikrocontroller und/oder die funktionsprogrammierbare Hardwarekomponente liefert einen Response-Wert 14, der an den Decoder 11 zurückgegeben wird und es diesem ermöglicht, aufgrund einer Schlüsselfunktion des Response-Werts oder einer Bestimmung von Initialwerten, das Datensignal 12 zu decodieren und als Videosignal 15 an ein Fernsehgerät weiterzuleiten.

Die Figur 2 zeigt, wie eine Neuprogrammierung der funktionsprogrammierbaren Hardwarekomponente 3 erfolgt. In diesem Fall wird mit dem Datensignal 12 ein Programmierbefehl 16 in der Austastlücke übertragen, so daß es für den Benutzer unbemerkt bleibt. Der Decoder leitet den Programmierbefehl 16 an die Chipkarte weiter, wo daraufhin die Programmiervorrichtung 5 angesprochen wird, die die Reprogrammierung der funktionsprogrammierbaren Hardwarekomponente 3 vornimmt. Die Sendeanstalt hat nun die Möglichkeit, das Fernsehsignal anders zu verschlüsseln bzw. die Challenge-Werte zu verändern, so daß nur unter Anwendung der neu programmierten Funktion eine Decodierung möglich ist. Wenn der Reprogrammierungsvorgang häufig, beispielsweise jede Stunde, durchgeführt wird, ist es für Angreifer wenig praktikabel, jedesmal den neuen Algorithmus zu analysieren und ein FPGA entsprechend zu programmieren.

Zur direkten Nachbildung der Pay-TV-Chipkarte kann der Angreifer darüber hinaus auch keine handelsüblichen Mikrocontroller verwenden, sondern müßte ein Gesamt-Reverse-Engineering sowie eine Fabrikation der Einheit 4 mit dem Mikrocontroller 2 und der funktionsprogrammierbaren Hardwarekomponente 3 starten.

Die Anwendung der erfindungsgemäßen Chipkarte bzw. des erfindungsgemäßen Verfahrens ist natürlich nicht auf Pay-TV-Anwendungen beschränkt, sondern kann auf alle Systeme angewandt werden, in denen mit einem Challenge/Response-Verfahren gearbeitet wird.

## Patentansprüche

1. Verfahren zur Decodierung eines Datensignals mit
- einem Decoder (11) und
- einer Chipkarte (1)
mit folgenden Verfahrensschritten:
- Übertragung eines Datensignals (12) und eines Challenge-Werts (13) zu dem Decoder (11),
- Senden des Challenge-Werts (13) an die Chipkarte (1),
- Anwendung eines Kryptoalgorithmus auf den Challenge-Wert (13) auf der Chipkarte (1) und Rückgabe eines Response-Werts (14) an den Decoder (11),
- Decodierung des Datensignals (12) unter Verwendung des Response-Werts (14),
wobei der Kryptoalgorithmus in einer funktionsprogrammierbaren Hardwarekomponente (3) ausgeführt wird und durch das Senden eines Steuerbefehls (16) an die Chipkarte (1) modifizierbar ist.

2. Verfahren nach Anspruch 1,
**dadurch gekennzeichnet, daß** der Steuerbefehl (16) von dem Decoder (11) empfangen und dann an die Chipkarte (1) weiter geleitet wird.

3. Verfahren nach Anspruch 2,
**dadurch gekennzeichnet, daß** der Steuerbefehl (16) in einer Austastlücke eines Fernsehsignals vom Decoder (11) empfangen wird.

4. Anordnung mit
- einem Decoder (11) zur Decodierung eines Datensignals und
- einer Chipkarte (1), die zur Durchführung des Verfahrens nach einem der Ansprüche 1 bis 3 eingerichtet ist.

## Claims

1. Method for decoding a data signal having
- a decoder (11) and
- a smart card (1),
having the following method steps:
- transmission of a data signal (12) and of a challenge value (13) to the decoder (11),
- sending of the challenge value (13) to the smart card (1),
- application of a crypto algorithm to the challenge value (13) on the smart card (1), and return of a response value (14) to the decoder (11),
- decoding of the data signal (12) using the response value (14),
in which the crypto algorithm is carried out in a programmable-function hardware component (3) and can be modified by sending a control command (16) to the smart card (1).

2. Method according to Claim 1,
**characterized in that** the control command (16) is received by the decoder (11) and is then passed on to the smart card (1).

3. Method according to Claim 2,
**characterized in that** the control command (16) is received by the decoder (11) in a blanking interval in a television signal.

4. Arrangement having
- a decoder (11) for decoding a data signal and
- a smart card (1), which is set up to carry out the method according to one of Claims 1 to 3.

## Revendications

1. Procédé pour le décodage d'un signal de données comportant
- un décodeur (11) et
- une carte (1) à puce
comportant les étapes opératoires suivantes :
- transmission d'un signal (12) de données et d'une valeur (13) challenge au décodeur (11),
- émission de la valeur (13) challenge à destination de la carte (1) à puce,
- application d'un cryptoalgorithme à la valeur (13) challenge sur la carte à puce (1) et renvoi d'une valeur (14) réponse au décodeur (11),
- décodage du signal (12) de données en utilisant la valeur (14) réponse,
le cryptoalgorithme étant réalisé dans un composant (3) en matériel à fonction programmable et pouvant être modifié par l'émission d'une instruction (16) de commande à destination de la carte (1) à puce.

2. Procédé suivant la revendication 1,
**caractérisé en ce que** l'instruction (16) de commande est reçue par le décodeur (11) et ensuite retransmise à la carte (1) à puce.

3. Procédé suivant la revendication 2,
**caractérisé en ce que** l'instruction (16) de commande est reçue par le décodeur (11) dans un intervalle de suppression d'un signal de télévision.

4. Dispositif comportant
- un décodeur (11) pour le décodage d'un signal de données et
- une carte (1) à puce qui est conçue pour la réalisation du procédé suivant l'une de revendications 1 à 3.
